# EUROPÄISCHE PATENTANMELDUNG

(11) **EP 4 755 701 A1**
(43) Veröffentlichungstag der Anmeldung: **10.06.2026**
(21) Anmeldenummer: 25213576.9
(22) Anmeldetag: 05.11.2025
(51) Int. Cl.: B60L 53/16, B60L 58/12, B60Q 1/26, B66F 17/00

(54) **FLURFÖRDERZEUG MIT EINER TRAKTIONSBATTERIE UND MIT EINEM LADESTECKERELEMENT**

(30) Priorität: 05.12.2024 DE 102024136329
(71) Anmelder: STILL GmbH, 22113 Hamburg (DE)
(72) Erfinder: Rehder, Jan-Christian, 20457 Hamburg (DE); Mey, Jörn, 23879 Mölln (DE)
(74) Vertreter: Patentship Patentanwaltgesellschaft

(57) **Zusammenfassung**

Die Erfindung betrifft ein Flurförderzeug (1) mit einem elektrischen Antriebssystem und einer Traktionsbatterie (2), die das elektrische Antriebssystem mit elektrischer Energie versorgt, wobei das Flurförderzeug (1) mit einem Ladesteckerelement (5) versehen ist, das hinter mindestens einer Abdeckung (6) angeordnet ist, die zwischen einer das Ladesteckerelement (5) abdeckenden Schließstellung und einer das Ladesteckerelement (5) freigebenden Öffnungsstellung bewegbar ist, wobei bei in der Öffnungsstellung befindlicher Abdeckung (6) das Ladesteckerelement (6) für ein Gegensteckerelement eines Ladekabels zum Laden der Traktionsbatterie (2) zugänglich ist. Benachbart an dem Ladesteckerelement (5) ist an dem Flurförderzeug (1) eine Beleuchtungseinrichtung (10) angeordnet.

## Beschreibung

Die Erfindung betrifft ein Flurförderzeug mit einem elektrischen Antriebssystem und einer Traktionsbatterie, die das elektrische Antriebssystem mit elektrischer Energie versorgt, wobei das Flurförderzeug mit einem Ladesteckerelement versehen ist, das hinter mindestens einer Abdeckung angeordnet ist, die zwischen einer das Ladesteckerelement abdeckenden Schließstellung und einer das Ladesteckerelement freigebenden Öffnungsstellung bewegbar ist, wobei bei in der Öffnungsstellung befindlicher Abdeckung das Ladesteckerelement für ein Gegensteckerelement eines Ladekabels zum Laden der Traktionsbatterie zugänglich ist.

Bei Flurförderzeugen mit einem elektronischen Antriebsystem ist eine Traktionsbatterie im Flurförderzeug vorgesehen, die das elektrische Antriebssystem mit elektrischer Energie versorgt. Eine entladene Traktionsbatterie ist für den Betrieb des Flurförderzeugs wieder aufzuladen. Um hierbei einen Ladebetrieb der im Flurförderzeug befindlichen Traktionsbatterie zu ermöglichen, ist es bekannt, am Flurförderzeug ein Ladesteckerelement vorzusehen, das für den Ladebetrieb der Traktionsbatterie mit einem Gegensteckerelement eines Ladekabels verbindbar ist. Das Ladesteckerelement ist hierbei zum Schutz vor Verschmutzungen und vor Beschädigungen im Betrieb des Flurförderzeus hinter einer Abdeckung angeordnet, die zwischen einer das Ladesteckerelement abdeckenden Schließstellung und einer das das Ladesteckerelement freigebenden Öffnungsstellung bewegbar ist.

Ein gattungsgemäßes Flurförderzeug mit den Merkmalen des Oberbegriffs des Patentanspruchs 1 ist aus der DE 10 2015 109 081 A1 bekannt.

Bei dem aus DE 10 2015 109 081 A1 bekannten Flurförderzeug ist nachteilig, dass in dunkler Umgebung das hinter der Abdeckung befindliche Ladesteckerelement von einer Bedienperson zum Einstecken des Gegensteckerelements für den Ladebetrieb der Traktionsbatterie schlecht einsehbar und schlecht erkennbar ist, so dass sich ein hoher Zeitaufwand für das sichere Verbinden des Gegensteckerelements mit dem Ladesteckerelement ergibt. Zudem ist bei dem aus DE 10 2015 109 081 A1 bekannten Flurförderzeug nachteilig, dass am Flurförderzeug keine Ladeanzeige vorgesehen ist, mit der eine Bedienperson beim Ladevorgang der Traktionsbatterie eine Auskunft über den Ladevorgang der Traktionsbatterie, beispielsweise den Ladezustand der Traktionsbatterie, erhält.

Der vorliegenden Erfindung liegt die Aufgabe zugrunde, ein Flurförderzeug der eingangs genannten Gattung zur Verfügung zu stellen, die hinsichtlich der genannten Nachteile verbessert ist.

Diese Aufgabe wird erfindungsgemäß dadurch gelöst, dass benachbart an dem Ladesteckerelement an dem Flurförderzeug eine Beleuchtungseinrichtung angeordnet ist.

Erfindungsgemäß ist somit an dem Flurförderzeug benachbart zu dem Ladesteckerelement eine Beleuchtungseinrichtung angeordnet und vorgesehen. Als benachbart im Sinne der Erfindung ist insbesondere eine Anordnung der Beleuchtungseinrichtung in unmittelbarer Nähe und angrenzend an das Ladesteckerelement zu verstehen, wobei insbesondere zwischen der Beleuchtungseinrichtung und dem Ladesteckerelement ein Abstand von maximal 20cm, bevorzugt von maximal 10cm, ausgebildet ist. Mit dem Ladesteckerelement und der unmittelbar neben dem Ladesteckerelement angeordneten Beleuchtungseinrichtung wird somit an dem Flurförderzeug ein beleuchteter Ladezugang geschaffen, der mit der Beleuchtungseinrichtung eine gute und helle Ausleuchtung des Ladesteckerelements für ein einfaches und schnelles Stecken beim Einstecken des Gegensteckerelements für den Ladebetrieb der Traktionsbatterie ermöglicht und unmittelbar an dem Ladesteckerelement die Möglichkeit einer Ladeanzeige ermöglicht, mit der eine Bedienperson beim Ladevorgang der Traktionsbatterie eine Auskunft über Ladeinformationen beim Ladevorgang der Traktionsbatterie, beispielsweise den Ladezustand der Traktionsbatterie, erhält.

Gemäß einer vorteilhaften Ausführungsform der Erfindung weist die Beleuchtungseinrichtung mindestens ein aus mehreren Leuchtdioden bestehendes Leuchtband auf. Hierdurch ergeben sich Vorteile, da mit einem aus mehreren Leuchtdioden, sogenannten LEDs, bestehenden Leuchtband, bei denen die einzelnen Leuchtdioden in verschiedenen Farben Licht ausstrahlen können, in einfacher Weise eine Beleuchtungseinrichtung gebildet werden kann, die eine gute und helle Ausleuchtung des Ladesteckerelements beim Einstecken des Gegensteckerelements für den Ladebetrieb der Traktionsbatterie und eine Ladeanzeige während des Ladebetriebs der Traktionsbatterie ermöglicht. Ein Leuchtband im Sinne der Erfindung ist als Anordnung zu verstehen, bei der mehrere Leuchtdioden in Reihe nebeneinander angeordnet sind.

Gemäß einer vorteilhaften Ausführungsform der Erfindung ist an dem Flurförderzeug linksseitig zu dem Ladesteckerelement ein linkes Leuchtband und rechtsseitig zu dem Ladesteckerelement ein rechtes Leuchtband angeordnet. Hierdurch kann in besonders einfacher Weise ein gute Ausleuchtung des Ladesteckerelements beim Einstecken des Gegensteckerelements für den Ladebetrieb der Traktionsbatterie und eine gute Sichtbarkeit und Wahrnehmbarkeit der Ladeanzeige während des Ladebetriebs der Traktionsbatterie erzielt werden.

Gemäß einer vorteilhaften Ausführungsform der Erfindung ist die Beleuchtungseinrichtung in der Schließstellung der Abdeckung innerhalb der Außenkontur der Abdeckung angeordnet. Die Beleuchtungseinrichtung ist somit in der Schließstellung der Abdeckung hinter der Abdeckung angeordnet, wodurch in einfacher Weise ein Schutz der Beleuchtungseinrichtung vor Verschmutzung und Beschädigungen im Betrieb des Flurförderzeugs erzielt werden kann.

Gemäß einer vorteilhaften Ausführungsform der Erfindung steht die Beleuchtungseinrichtung mit einer Ansteuereinrichtung in Wirkverbindung. Mit einer Ansteuereinrichtung, beispielsweise einer elektronischen Ansteuereinrichtung, kann die Beleuchtungseinrichtung in einfacher Weise angesteuert werden. Die Ansteuereinrichtung kann beispielsweise von der elektronischen Fahrzeugsteuerung gebildet sein.

Gemäß einer vorteilhaften Ausführungsform der Erfindung ist die Ansteuereinrichtung ausgebildet, die Beleuchtungseinrichtung bei in der Schließstellung befindlicher Abdeckung als Tagfahrlicht anzusteuern, insbesondere die Leuchtbänder anzusteuern, weißes Licht auszustrahlen, wobei die Abdeckung zumindest teilweise transparent ausgebildet ist oder wobei zwischen der Außenkontur der in der Schließstellung befindlichen Abdeckung und dem Flurförderzeug ein Spalt ausgebildet ist. Im Betrieb des Flurförderzeugs bei geschlossener Abdeckung kann somit die Beleuchtungseinrichtung an dem Ladesteckerelement als Tagfahrlicht des Flurförderzeugs verwendet werden, was zu einer erhöhten Sicherheit des Flurförderzeugs beiträgt. Das von der hinter der geschlossenen Abdeckung befindlichen Beleuchtungseinrichtung ausgestrahlte Licht kann hierbei über einen Spalt, beispielsweise einen umlaufender Spalt, zwischen der Außenkontur der geschlossenen Abdeckung und dem Flurförderzeug oder über einen transparenten Bereich der Abdeckung in die Umgebung des Flurförderzeugs gelangen. Sofern die Abdeckung mit einem Markenemblem versehen ist, kann hierdurch von der Beleuchtungseinrichtung an dem Ladesteckerelement weiterhin eine Beleuchtung des Markenemblems im Betrieb des Flurförderzeugs erzielt werden.

Gemäß einer vorteilhaften Ausführungsform der Erfindung ist die Ansteuereinrichtung ausgebildet, die Beleuchtungseinrichtung bei in der Öffnungsstellung befindlicher Abdeckung als Ladezugangsbeleuchtung anzusteuern, insbesondere die Leuchtbänder anzusteuern, weißes Licht auszustrahlen. Hierdurch kann in einfacher Weise ein gute und helle Ausleuchtung des Ladesteckerelements für ein einfaches und schnelles Stecken beim Einstecken des Gegensteckerelements für den Ladebetrieb der Traktionsbatterie ermöglicht werden.

Gemäß einer vorteilhaften Ausführungsform der Erfindung ist die Ansteuereinrichtung ausgebildet, die Beleuchtungseinrichtung im Ladebetrieb der Traktionsbatterie als Ladeanzeige anzusteuern, insbesondere die Leuchtbänder anzusteuern, grünes Licht auszustrahlen. Hierdurch kann in einfacher Weise im Ladebetrieb der Traktionsbatterie eine intuitive optische Kommunikation von Ladeinformationen beim Ladevorgang der Traktionsbatterie zwischen dem Flurförderzeug und einer Bedienperson erzielt werden.

Gemäß einer vorteilhaften Ausführungsform der Erfindung ist die Ansteuereinrichtung ausgebildet, die Leuchtbänder als Ladezustandsanzeige anzusteuern, wobei die Anzahl der Leuchtdioden in Abhängigkeit von dem Ladezustand der Traktionsbatterie aktiviert wird. Sofern die Leuchtbäder mehrere Leuchtdioden aufweisen, kann über die Anzahl der aktivierten und somit leuchtenden Leuchtdioden in einfacher Weise der Ladezustand der Traktionsbatterie im Ladebetrieb kommuniziert werden. Die Leuchtdioden werden hierzu bevorzugt dauerhaft aktiviert. Beispielweise kann bei einer Ausführung des Leuchtbandes mit zehn Leuchtdioden der dauerhafte Betrieb von zwei Leuchtdioden einen Ladezustand der Traktionsbatterie von 20%, der dauerhafte Betrieb von drei Leuchtdioden einen Ladezustand der Traktionsbatterie von 30%, der dauerhafte Betrieb von vier Leuchtdioden einen Ladezustand der Traktionsbatterie von 40%, der dauerhafte Betrieb von fünf Leuchtdioden einen Ladezustand der Traktionsbatterie von 50%, der dauerhafte Betrieb von sechs Leuchtdioden einen Ladezustand der Traktionsbatterie von 60%, der dauerhafte Betrieb von sieben Leuchtdioden einen Ladezustand der Traktionsbatterie von 70%, der dauerhafte Betrieb von acht Leuchtdioden einen Ladezustand der Traktionsbatterie von 80%, der dauerhafte Betrieb von neun Leuchtdioden einen Ladezustand der Traktionsbatterie von 90% und der dauerhafte Betrieb aller zehn Leuchtdioden einen Ladezustand der Traktionsbatterie von 100% signalisieren.

Gemäß einer vorteilhaften Ausführungsform der Erfindung ist die Ansteuereinrichtung ausgebildet, die Leuchtbänder als Ladebetriebsanzeige anzusteuern, wobei die Leuchtdioden der Reihe nach in Form eines Laufbandes aktiviert werden oder wobei die Leuchtdioden in einem Blinkmodus aktiviert werden. Hierdurch kann in einfacher beim Ladebetrieb der Traktionsbatterie ein Ladevorgang der Traktionsbatterie in einfacher Weise signalisiert werden. Beispielsweise können ausgehend von einem bestimmten Ladezustand, bei dem einige der Leuchtdioden dauerhaft aktiviert sind, die restlichen Leuchtdioden in einem Blinkmodus oder in Form eines hoch laufenden Laufbandes aktiviert werden, um den eigentlichen Ladevorgang der Traktionsbatterie zu signalisieren.

Gemäß einer vorteilhaften Ausführungsform der Erfindung die Ansteuereinrichtung ausgebildet ist, die Beleuchtungseinrichtung als Fehleranzeige anzusteuern, insbesondere die Leuchtbänder anzusteuern, rotes Licht, insbesondere in einem Blinkmodus, auszustrahlen. Mit einer derartigen Fehleranzeige kann in einfacher Weise ein Fehler im Ladebetrieb des Flurförderzeugs bei geöffneter Abdeckung an eine Bedienperson signalisiert werden. Alternativ oder zusätzlich kann mit einer derartigen Fehleranzeige in einfacher Weise ein Fehler im Betrieb des Flurförderzeugs bei geschlossener Abdeckung an in der Umgebung des Flurförderzeugs befindliche Personen signalisiert werden.

Gemäß einer vorteilhaften Ausführungsform der Erfindung ist die Abdeckung zwischen der Schließstellung und der Öffnungsstellung um eine Schwenkachse, insbesondere eine horizontale Schwenkachse oder einer vertikalen Schwenkachse, klappbar.

Gemäß einer vorteilhaften und alternativen Ausführungsform der Erfindung ist die Abdeckung zwischen der Schließstellung und der Öffnungsstellung verschiebbar.

Alternativ kann die Abdeckung als steckbare Abdeckung ausgebildet sein, die beispielsweise mittels einer Clipsverbindung am Flurförderzeug zum Abdecken des Ladesteckerelements befestigbar ist und für den Ladebetrieb der Traktionsbatterie vom Flurförderzeug entfernbar ist.

Gemäß einer vorteilhaften Ausführungsform der Erfindung ist das Flurförderzeug als Gegengewichtsgabelstapler ausgebildet ist und sind das Ladesteckerelement und die Abdeckung an einer Heckseite eines Gegengewichts angeordnet. Hierdurch kann mit der benachbart an dem Ladesteckerelement an dem Flurförderzeug angeordneten Beleuchtungseinrichtung in einfacher Weise ein heckseitiges Tagfahrlicht an der Heckseite des Flurförderzeugs gebildet werden.

Weitere Vorteile und Einzelheiten der Erfindung werden anhand des in der schematischen Figuren dargestellten Ausführungsbeispiels näher erläutert.
- Figur 1: ein erfindungsgemäßes Flurförderzeug in einer Seitenansicht,
- Figur 2: eine Heckansicht des Flurförderzeugs Figur 1 mit einer in der Schließstellung befindlichen Abdeckung,
- Figur 3: eine Darstellung gemäß der Figur 2 mit der in der Öffnungsstellung befindlichen Abdeckung,
- Figur 4: eine Darstellung gemäß der Figur 3 mit einer Ansteuerung der Beleuchtungseinrichtung als Ladeanzeige und
- Figur 5: eine Darstellung gemäß der Figur 3 mit einer Ansteuerung der Beleuchtungseinrichtung als Fehleranzeige.

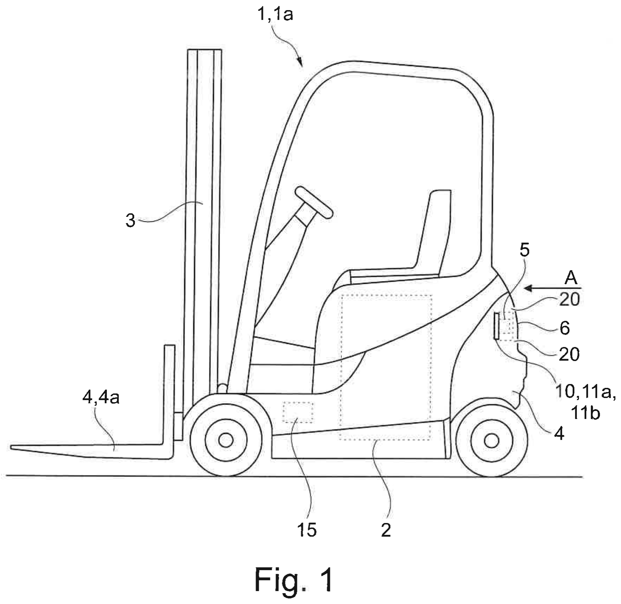

In der Figur 1 ist ein erfindungsgemäßes Flurförderzeug 1 mit einem elektrischen Antriebssystem dargestellt. Das Flurförderzeug 1 weist eine Traktionsbatterie 2 auf, die das elektrische Antriebssystem des Flurförderzeugs 1 mit elektrischer Energie versorgt. Das elektrische Antriebsystem umfasst bevorzug mindestens einen elektrischen Fahrmotor eines Fahrantriebs und einen elektrischen Pumpenmotor einer Hydraulikanlage des Flurförderzeugs 1.

Im dargestellten Ausführungsbeispiel ist das Flurförderzeug 1 als Gegengewichtsgabelstapler 1a ausgebildet, jedoch ist die Erfindung nicht auf einen Gegengewichtsgabelstapler beschränkt.

Der Gegengewichtsgabelstapler 1a weist im Frontbereich ein Hubgerüst 3 mit einem anhebbar und absenkbar angeordneten Lastaufnahmemittel 4, beispielsweise einer Lastgabel 4a, auf. Im Heckbereich ist der Gegengewichtsgabelstapler 1a mit einem Gegengewicht 4 versehen.

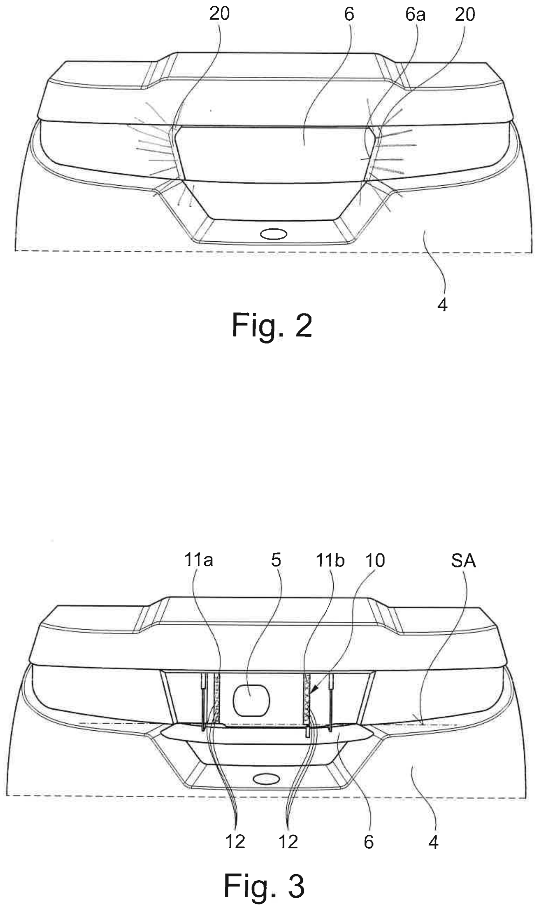

In den Figuren 2 bis 5 ist eine Darstellung gemäß Pfeil A in der Figur 1 mit einer Ansicht auf die Heckseite des Gegengewichts 4 des Flurförderzeugs 1 dargestellt.

Wie aus der Figur 1 in Verbindung mit den Figuren 2 bis 5 ersichtlich ist, ist das Flurförderzeug 1 mit einem Ladesteckerelement 5 versehen, das hinter einer Abdeckung 6 angeordnet ist.

Das Ladesteckerelement 5 und die Abdeckung 6 sind an einer Heckseite des Gegengewichts 4 angeordnet.

Die Abdeckung 6 ist zwischen einer das Ladesteckerelement 5 abdeckenden Schließstellung, die in den Figuren 1 und 2 dargestellt ist, und einer das Ladesteckerelement 5 freigebenden Öffnungsstellung bewegbar, die in den Figuren 3 bis 5 dargestellt ist.

Bei in der Öffnungsstellung befindlichen Abdeckung 6 ist das Ladesteckerelement 5 für ein in den Figuren nicht näher dargestelltes Gegensteckerelement eines Ladekabels zum Laden der im Flurförderzeug 1 befindlichen Traktionsbatterie 2 zugänglich.

Im dargestellten Ausführungsbeispiel ist die Abdeckung 6 als Abdeckklappe ausgebildet, die zwischen der Schließstellung und der Öffnungsstellung um eine horizontale Schwenkachse SA klappbar am Gegengewicht 4 angeordnet ist.

Wie aus der Figur 1 in Verbindung mit den Figuren 3 bis 5 ersichtlich ist, ist benachbart an dem Ladesteckerelement 5 und somit angrenzend an des Steckerelement 5 an dem Flurförderzeug 1 eine Beleuchtungseinrichtung 10 angeordnet.

Die Beleuchtungseinrichtung 10 weist im dargestellten Ausführungsbeispiel mindestens ein aus mehreren Leuchtdioden 12, LEDs, bestehendes Leuchtband 11a, 11b auf. Die Leuchtdioden 12 sind bevorzugt derart ausgebildet, dass diese Licht in unterschiedlichen Farben, beispielsweise weiß, grün und rot, ausstrahlen können.

Im dargestellten Ausführungsbeispiel besteht jedes Leuchtband 11a, 11b aus bevorzugt zehn Leuchtdioden 12, die in Reihe angeordnet sind.

Im dargestellten Ausführungsbeispiel ist an dem Flurförderzeug 1 linksseitig zu dem Ladesteckerelement 5 ein linkes Leuchtband 11a und rechtsseitig zu dem Ladesteckerelement 5 ein rechtes Leuchtband 11b angeordnet ist, wobei die Leuchtbänder 11a, 11b jeweils mehrere Leuchtdioden 12, LEDs, aufweisen.

Das Leuchtband 11a ist im dargestellten Ausführungsbeispiel mit einer vertikalen Erstreckung benachbart und angrenzend an des Steckerelement 5 an der linken Seite des Steckerelements 5 angeordnet. Das Leuchtband 11b ist im dargestellten Ausführungsbeispiel mit einer vertikalen Erstreckung benachbart und angrenzend an des Steckerelement 5 an der rechten Seite des Steckerelements 5 angeordnet.

In der Schließstellung der Abdeckung 6 ist die Beleuchtungseinrichtung 10 - wie aus der Figur 2 ersichtlich ist - innerhalb der Außenkontur 6a der Abdeckung 6 angeordnet und befindet sich hinter der geschlossenen Abdeckung 6.

Die Beleuchtungseinrichtung 10 steht zur Ansteuerung mit einer Ansteuereinrichtung 15, beispielsweise einer elektronischen Ansteuereinrichtung, des Flurförderzeugs 1 in Wirkverbindung.

Die Ansteuereinrichtung 15 ist ausgebildet, die Beleuchtungseinrichtung 15 bei in der Schließstellung befindlicher Abdeckung 6 als Tagfahrlicht anzusteuern. Hierzu sind bevorzugt alle Leuchtdioden 12 der Leuchtbänder 11a, 11b derart angesteuert, dass diese dauerhaft helles, weißes Licht ausstrahlen. Die Figur 2 zeigt das Flurförderzeug 1 mit in der Schließstellung befindlicher Abdeckung 6 und als Tagfahrlicht angesteuerten Leuchtdioden 12. Zwischen der Außenkontur 6a der geschlossenen Abdeckung 6 und der Kontur des Gegengewichts 4 ist ein Spalt 20 ausgebildet, durch den das von den Leuchtdioden 12 emittierte Licht in die Umgebung des Flurförderzeugs 1 gelangen kann.

Die Ansteuereinrichtung 15 ist zusätzlich oder alternativ ausgebildet, die Beleuchtungseinrichtung 10 bei in der Öffnungsstellung befindlicher Abdeckung 6 als Ladezugangsbeleuchtung anzusteuern. Hierzu sind bevorzugt alle Leuchtdioden 12 der Leuchtbänder 11a, 11b derart angesteuert, dass diese dauerhaft helles, weißes Licht ausstrahlen.

Die Ansteuereinrichtung 15 ist zusätzlich oder alternativ ausgebildet, die Beleuchtungseinrichtung 10 im Ladebetrieb der Traktionsbatterie 2 als Ladeanzeige anzusteuern. Hierzu sind bevorzugt - je nach Ladezustand der Traktionsbatterie 2 - ein Teil oder alle Leuchtdioden 12 der Leuchtbänder 11a, 11b derart angesteuert, dass diese grünes Licht ausstrahlen, bevorzugt dauerhaft ausstrahlen.

Die Ansteuereinrichtung 15 ist hierzu ausgebildet, die Leuchtbänder 11a, 11b als Ladezustandsanzeige anzusteuern, wobei die Anzahl der Leuchtdioden 12 in Abhängigkeit von dem Ladezustand der Traktionsbatterie 2 aktiviert wird. Bei einem Ladezustand der Traktionsbatterie von 10% wird bevorzugt jeweils nur die vertikal unterste Leuchtdiode an den beiden Leuchtbändern 11a, 11b angesteuert, grünes Licht dauerhaft auszustrahlen. Für jede 10% mehr Ladezustand der Traktionsbatterie 2 wird an den Lichtbändern 11a, 11b jeweils die der bereits angesteuerten Leuchtdiode 12 oben liegende Leuchtdiode 12 angesteuert, grünes Licht dauerhaft auszustrahlen, bis bei einem Ladezustand von 100% der Traktionsbatterie 2 alle Leuchtdioden 12 der Leuchtbänder 11a, 11b angesteuert sind und dauerhaft grünes Licht ausstrahlen.

Die Ansteuereinrichtung 15 ist zusätzlich oder alternativ ausgebildet, die Leuchtbänder 11a, 11b als Ladebetriebsanzeige anzusteuern, wobei die Leuchtdioden 12 der Reihe nach in Form eines Laufbandes aktiviert werden oder wobei die Leuchtdioden 12 in einem Blinkmodus aktiviert werden. Hierzu sind bevorzugt die Leuchtdioden 12 der Leuchtbänder 11a, 11b derart angesteuert, dass diese grünes Licht ausstrahlen.

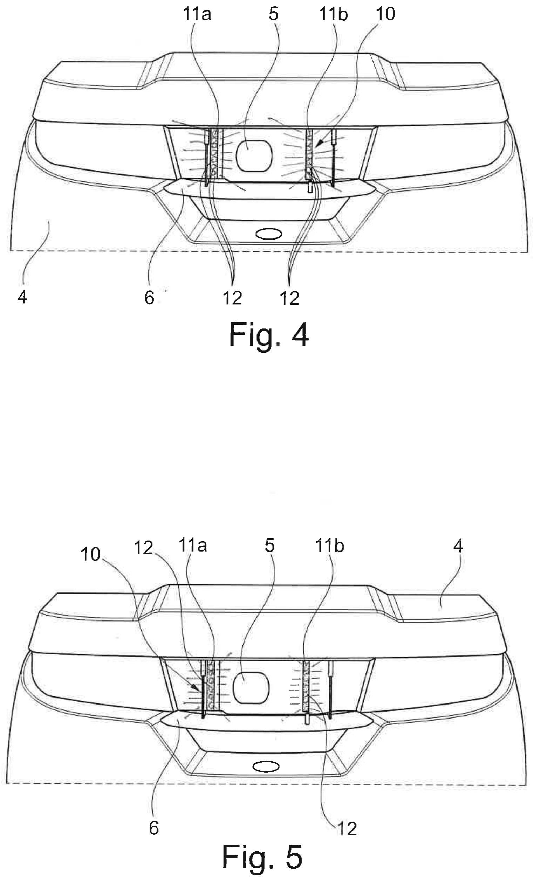

Die Figur 4 zeigt das Flurförderzeug 1 mit in der Öffnungsstellung befindlicher Abdeckung 6 und als Ladeanzeige angesteuerten Leuchtdioden 12.

In der Figur 4 sind jeweils die untersten drei Leuchtdioden 12 der beiden Leuchtbänder 11a, 11b jeweils angesteuert, dauerhaft grünes Licht auszustrahlen, um als Ladezustandsanzeige einen Ladezustand der Traktionsbatterie 2 von 30% zu signalisieren, und die restlichen Leuchtdioden 12 der beiden Leuchtbänder 11a, 11b in Form eines Laufbandes oder in einem Blinkmodus mit grünem Licht aktiviert, um als Ladebetriebsanzeige einen Ladebetrieb der Traktionsbatterie 2 zu signalisieren.

Die Ansteuereinrichtung 15 ist zusätzlich oder alternativ ausgebildet, die Beleuchtungseinrichtung 10 als Fehleranzeige anzusteuern. Hierzu sind bevorzugt alle Leuchtdioden 12 der Leuchtbänder 11a, 11b derart angesteuert, dass diese rotes Licht, bevorzugt in einem Blinkmodus, auszustrahlen. Die Figur 5 zeigt das Flurförderzeug 1 mit in der Öffnungsstellung befindlicher Abdeckung 6 und als Fehleranzeige angesteuerten Leuchtdioden 12.

## Patentansprüche

1. Flurförderzeug (1) mit einem elektrischen Antriebssystem und einer Traktionsbatterie (2), die das elektrische Antriebssystem mit elektrischer Energie versorgt, wobei das Flurförderzeug (1) mit einem Ladesteckerelement (5) versehen ist, das hinter mindestens einer Abdeckung (6) angeordnet ist, die zwischen einer das Ladesteckerelement (5) abdeckenden Schließstellung und einer das Ladesteckerelement (5) freigebenden Öffnungsstellung bewegbar ist, wobei bei in der Öffnungsstellung befindlicher Abdeckung (6) das Ladesteckerelement (6) für ein Gegensteckerelement eines Ladekabels zum Laden der Traktionsbatterie (2) zugänglich ist, **dadurch gekennzeichnet, dass** benachbart an dem Ladesteckerelement (5) an dem Flurförderzeug (1) eine Beleuchtungseinrichtung (10) angeordnet ist.

2. Flurförderzeug nach Anspruch 1, **dadurch gekennzeichnet, dass** die Beleuchtungseinrichtung (10) mindestens ein aus mehreren Leuchtdioden (12) bestehendes Leuchtband (11a, 11b) aufweist.

3. Flurförderzeug nach Anspruch 2, **dadurch gekennzeichnet, dass** an dem Flurförderzeug (1) linksseitig zu dem Ladesteckerelement (5) ein linkes Leuchtband (11a) und rechtsseitig zu dem Ladesteckerelement (5) ein rechtes Leuchtband (11b) angeordnet ist.

4. Flurförderzeug nach einem der Ansprüche 1 bis 3, **dadurch gekennzeichnet, dass** die Beleuchtungseinrichtung (10) in der Schließstellung der Abdeckung (6) innerhalb der Außenkontur (6a) der Abdeckung (6) angeordnet ist.

5. Flurförderzeug nach einem der Ansprüche 1 bis 4, **dadurch gekennzeichnet, dass** die Beleuchtungseinrichtung (10) mit einer Ansteuereinrichtung (15), insbesondere einer elektronische Ansteuereinrichtung (15), in Wirkverbindung steht.

6. Flurförderzeug nach Anspruch 5, **dadurch gekennzeichnet, dass** die Ansteuereinrichtung (15) ausgebildet ist, die Beleuchtungseinrichtung (10) bei in der Schließstellung befindlicher Abdeckung (6) als Tagfahrlicht anzusteuern, insbesondere die Leuchtbänder (11a, 11b) anzusteuern, weißes Licht auszustrahlen, wobei die Abdeckung (6) zumindest teilweise transparent ausgebildet ist oder wobei zwischen der Außenkontur (6a) der Abdeckung (6) und dem Flurförderzeug (1) ein Spalt (20) ausgebildet ist.

7. Flurförderzeug nach Anspruch 5 oder 6, **dadurch gekennzeichnet, dass** die Ansteuereinrichtung (15) ausgebildet ist, die Beleuchtungseinrichtung (10) bei in der Öffnungsstellung befindlicher Abdeckung (6) als Ladezugangsbeleuchtung anzusteuern, insbesondere die Leuchtbänder (11a, 11b) anzusteuern, weißes Licht auszustrahlen.

8. Flurförderzeug nach einem der Ansprüche 5 bis 7, **dadurch gekennzeichnet, dass** die Ansteuereinrichtung (15) ausgebildet ist, die Beleuchtungseinrichtung (10) im Ladebetrieb der Traktionsbatterie (2) als Ladeanzeige anzusteuern, insbesondere die Leuchtbänder (11a, 11b) anzusteuern, grünes Licht auszustrahlen.

9. Flurförderzeug nach Anspruch 8, **dadurch gekennzeichnet, dass** die Ansteuereinrichtung (15) ausgebildet ist, die Leuchtbänder (11a, 11b) als Ladezustandsanzeige anzusteuern, wobei die Anzahl der Leuchtdioden (12) in Abhängigkeit von dem Ladezustand der Traktionsbatterie (2) aktiviert wird.

10. Flurförderzeug nach Anspruch 8 oder 9, **dadurch gekennzeichnet, dass** die Ansteuereinrichtung (15) ausgebildet ist, die Leuchtbänder (11a, 11b) als Ladebetriebsanzeige anzusteuern, wobei die Leuchtdioden (12) der Reihe nach in Form eines Laufbandes aktiviert werden oder wobei die Leuchtdioden (12) in einem Blinkmodus aktiviert werden.

11. Flurförderzeug nach einem der Ansprüche 5 bis 10, **dadurch gekennzeichnet, dass** die Ansteuereinrichtung (15) ausgebildet ist, die Beleuchtungseinrichtung (10) als Fehleranzeige anzusteuern, insbesondere die Leuchtbänder (11a, 11b) anzusteuern, rotes Licht, insbesondere in einem Blinkmodus, auszustrahlen.

12. Flurförderzeug nach einem der Ansprüche 1 bis 11, **dadurch gekennzeichnet, dass** die Abdeckung (6) zwischen der Schließstellung und der Öffnungsstellung um eine Schwenkachse (SA), insbesondere eine horizontale Schwenkachse (SA) oder einer vertikalen Schwenkachse, klappbar ist.

13. Flurförderzeug nach einem der Ansprüche 1 bis 11, **dadurch gekennzeichnet, dass** die Abdeckung (6) zwischen der Schließstellung und der Öffnungsstellung verschiebbar ist.

14. Flurförderzeug nach einem der Ansprüche 1 bis 13, **dadurch gekennzeichnet, dass** das Flurförderzeug (1) als Gegengewichtsgabelstapler (1a) ausgebildet ist und das Ladesteckerelement (5) und die Abdeckung (6) an einer Heckseite eines Gegengewichts (4) angeordnet sind.
